# EUROPÄISCHE PATENTSCHRIFT

(11) **EP 3 788 406 B1**
(45) Veröffentlichungstag und Bekanntmachung des Hinweises auf die Patenterteilung: **24.04.2024**
(21) Anmeldenummer: 19724096.3
(22) Anmeldetag: 30.04.2019
(51) Int. Cl.: G01S 17/931, G01S 7/497

(54) **VERFAHREN ZUM BESTIMMEN EINER AUSRICHTUNG EINES OPTOELEKTRONISCHEN SENSORS MITTELS ABTASTPUNKTEN EINES SENSORBILDES SOWIE OPTOELEKTRONISCHER SENSOR**
METHOD FOR DETERMINING THE ALIGNMENT OF AN OPTOELECTRONIC SENSOR USING SCANNING POINTS OF A SENSOR IMAGE, AND OPTOELECTRONIC SENSOR
PROCÉDÉ PERMETTANT DE DÉTERMINER UNE ORIENTATION D'UN CAPTEUR OPTOÉLECTRONIQUE AU MOYEN DE POINTS DE BALAYAGE D'UNE IMAGE DU CAPTEUR ET CAPTEUR OPTOÉLECTRONIQUE

(30) Priorität: 04.05.2018 DE 102018110775
(43) Veröffentlichungstag der Anmeldung: 10.03.2021
(73) Patentinhaber: Valeo Schalter und Sensoren GmbH, 74321 Bietigheim-Bissingen (DE)
(72) Erfinder: SERGEEV, Nikolai, 74321 Bietigheim-Bissingen (DE)
(74) Vertreter: Pothmann, Karsten
(86) Internationale Anmeldenummer: PCT/EP2019/060992
(87) Internationale Veröffentlichungsnummer: WO 2019/211254

(56) Entgegenhaltungen:
- EP-A1- 1 557 691
- DE-A1-102009 046 124
- US-B1- 9 052 721

## Beschreibung

Die Erfindung betrifft ein Verfahren zum Bestimmen zumindest einer Winkellage eines optoelektronischen Sensors eines Kraftfahrzeugs. Der optoelektronische Sensor umfasst eine Sendeeinrichtung, eine Empfangseinheit mit zumindest zwei Empfangselementen und eine Auswerteeinheit. Mittels der Sendeeinrichtung werden Lichtstrahlen in eine Umgebung des Kraftfahrzeugs ausgesendet. Die an einem Objekt reflektieren Lichtstrahlen werden mittels der Empfangseinheit empfangen und mittels der Auswerteeinheit als Abtastpunkt in einem vom optoelektronischen Sensor erzeugten Sensorbild dargestellt. Jeder Abtastpunkt wird hierbei einem Empfangselement zugeordnet. Ferner betrifft die Erfindung einen optoelektronischen Sensor.

Aus dem Stand der Technik sind bereits Verfahren zur Detektion von Fehlausrichtungen von Lidarsensoren bekannt. Beispielsweise offenbart die US 9,052,721 B1 ein solches Verfahren. Der Lidar-Sensor liefert dazu eine 3D-Punktwolke, die am Boden und an mindestens einem Kraftfahrzeug reflektierte Abtastpunkte umfasst. Die 3D-Punktwolke wird mit einer 3D-Referenzpunktwolke verglichen und eine Fehlausrichtung des Lidarsensors berechnet.

Aufgabe der vorliegenden Erfindung ist es ein Verfahren sowie einen optoelektronischen Sensor zu schaffen, mittels welchem zumindest eine Winkellage des optoelektronischen Sensors verbessert bestimmt werden kann.

Diese Aufgabe wird durch ein Verfahren sowie durch einen optoelektronischen Sensor gemäß den unabhängigen Ansprüchen gelöst.

Ein Aspekt der Erfindung betrifft ein Verfahren zum Bestimmen zumindest einer Winkellage eines optoelektronischen Sensors eines Kraftfahrzeugs. Der optoelektronsiche Sensor umfasst zumindest eine Sendeeinrichtung, zumindest eine Empfangseinheit und eine Auswerteeinheit. Das Verfahren weist folgende Schritte auf:
- Aussenden von Lichtstrahlen in eine Umgebung des Kraftfahrzeugs durch die Sendeeinrichtung
- Empfangen von an einem Objekt reflektierten Lichtstrahlen durch die Empfangseinheit, wobei die empfangenen Lichtstrahlen durch die Auswerteeinheit als Abtastpunkte in einem vom optoelektronischen Sensor erzeugten Sensorbild von der Umgebung des Kraftfahrzeugs dargestellt werden. Ferner wird jeder Abtastpunkt einem Empfangselement zugeordnet.

In dem Sensorbild wird mittels zumindest zwei Abtastpunkten des ersten Empfangselements der Empfangseinheit ein Sensorkoordinatensystem bestimmt. Zusätzlich wird mit zumindest einem Abtastpunkt des ersten Empfangselementes mit zumindest einem Abtastpunkt des zweiten Empfangselements ein Referenzkoordinatensystem gebildet. Zur Bestimmung der zumindest einen Ausrichtung des optoelektronischen Sensors wird eine Winkelabweichung durch Vergleich des Sensorkoordinatensystem mit dem Referenzkoordinatensystem bestimmt.

Insbesondere können damit Abweichungen der Ausrichtung in der Horizontalen und in der Vertikalen des optoelektronischen Sensors des Kraftfahrzeugs bestimmt werden. Mittels des erfindungsgemäßen Verfahrens lässt sich somit die zumindest eine Winkellage des optoelektronischen Sensors insbesondere relativ zum Kraftfahrzeug bestimmen. Insbesondere kann dadurch eine Winkelabweichung bzw. eine Fehlausrichtung des optoelektronischen Sensors erkannt werden und mittels der Auswerteeinheit korrigiert werden, sodass ein verbesserter Betrieb des optoelektronischen Sensors ermöglicht ist. Der optoelektronische Sensor kann insbesondere als Lidar-Sensor oder als Laserscanner ausgebildet sein.

Erfindungsgemäß sind die zumindest zwei Empfangselemente entlang einer vertikalen Achse des optoelektronischen Sensors angeordnet werden. Somit kann das Sensorbild des optoelektronischen Sensor, welches durch die zumindest zwei Empfangselemente gebildet wird, zumindest zwei vertikale Ebenen aufweisen. Die Abtastpunkte des ersten Empfangselements bilden hierbei eine erste vertikale Ebene und die Abtastpunkte des zweiten Empfangselements eine zweite vertikale Ebene. Die Abtastpunkte des ersten Empfangselements und die Abtastpunkt des zweiten Empfangselements liegen dadurch zumindest in zwei Ebenen des Sensorbilds vertikal übereinander. Dadurch kann besonders einfach das Referenzkoordinatensystem erzeugt und die Winkelabweichung des optoelektronischen Sensors und entsprechend die zumindest eine Winkellage bestimmt werden.

Erfindungsgemäß wird durch zumindest zwei Abtastpunkte des ersten Empfangselements eine Abtastpunktgerade des Sensorbilds des optoelektronischen Sensors gelegt und mittels der Abtastpunktgeraden das Sensorkoordinatensystem bestimmt werden. Sollte der optoelektronische Sensor keine Fehlausrichtung aufweisen, so ist die Abtastpunktgerade insbesondere parallel zu einer Achse, die senkrecht zum optoelektronische Sensor definiert sein kann. Weist die Abtastpunktgerade einen Winkel zwischen der senkrecht zum Sensor definierten Achse auf, so ist insbesondere eine horizontale und/oder eine vertikale Lage des Sensors verkippt. Dieser Winkel kann insbesondere durch die Auswerteeinheit bestimmt werden und entspricht der zumindest einen Winkelabweichung des optoelektronischen Sensors insbesondere relativ zum Kraftfahrzeug. Insbesondere kann vorgesehen sein, dass jeweils eine Abtastpunktgerade des ersten Empfangselements und eine Abtastpunktgerade des zweiten Empfangselements erzeugt wird. Auf diese Weise können zumindest zwei Winkel zum Bestimmen der Winkelabweichung erfasst und die Winkelabweichung über den Mittelwert der beiden erfassten Winkel bestimmt werden. Hierbei kann ausgenutzt werden, dass die jeweiligen Abtastpunktgeraden des ersten Empfangselements parallel zu der jeweiligen Abtastpunktgeraden des zweiten Empfangselements verlaufen.

Erfindungsgemäß ist vorgesehen, dass die Winkelabweichung als Winkel zwischen der Abtastpunktgeraden und einer Referenzgeraden des Referenzkoordinatensystems bestimmt wird. Bei der Referenzgeraden kann es sich beispielsweise um eine Gerade handeln, die senkrecht zum optoelektronischen Sensor ausgerichtet ist. Es lässt sich somit einfach ein Schnittpunkt zwischen der Abtastpunktgeraden und der Referenzgeraden bestimmen. Der Winkel zwischen der Abtastpunktgeraden und der Referenzgeraden entspricht dann der Winkelabweichung des optoelektronischen Sensors insbesondere relativ zum Kraftfahrzeug.

Erfindungsgemäß ist vorgesehen, dass durch zumindest einen der Abtastpunkte des ersten Empfangselements und zumindest einem der Abtastpunkte des zweiten Empfangselements die Referenzgerade gelegt wird und das Referenzkoordinatensystem mittels der Referenzgeraden bestimmt wird. Zur Bestimmung der Referenzgerade werden Abtastpunkte des ersten und des zweiten Empfangselementes genutzt, die einen gleichen horizontalen Winkel aufweisen. Der horizontale Winkel, der einem Abtastpunkt zugeordnet werden kann, entspricht dem Aussendewinkel beim Aussenden eines Lichtstrahls in die Umgebung des Kraftfahrzeugs. Dies bedeutet, dass bei sequentiellem Abtasten von Raumwinkeln einem Abtastpunkt im Sensorbild der Raumwinkel zugeordnet werden kann, in dem die Lichtstrahlen in der jeweiligen Abtastmessung ausgesendet wurden. Hierbei kann angenommen werden, dass der optoelektronische Sensor in einer Abtastmessung nur Lichtstrahlen aus dem Raumwinkel empfangen kann, in dem Lichtstrahlen ausgesendet wurden. Die Referenzgerade durch die Abtastpunkte des ersten und des zweiten Empfangselementes mit gleichem horizontalen Winkel zu legen hat den Vorteil, dass diese Gerade immer senkrecht zu einer abgetasteten Oberfläche, z.b. einer Fahrbahnoberfläche, ausgerichtet ist. Somit kann das Referenzkoordinatensystem zuverlässig erzeugt werden, auch wenn eine Ist-Winkellage des optoelektronischen Sensors eine Winkelabweichung von einer Soll-Winkellage aufweist Es kann vorgesehen sein, dass Referenzgeraden für eine Vielzahl von Abtastpunkten des ersten und des zweiten Empfangselementes bestimmt werden und die Winkelabweichung als Mittelwert der Winkel zwischen der Referenzgeraden und der zumindest einen Abtastgeraden bestimmt wird.

Dadurch kann mittels zumindest einem Abtastpunkt des ersten Empfangselements und zumindest einem Abtastpunkten des zweiten Empfangselements die Referenzgerade bestimmt werden und das Referenzkoordinatensystem sehr einfach und zuverlässig, bestimmt werden. Insbesondere verlaufen die jeweiligen Referenzgeraden parallel zueinander, wenn die Abtastpunkt des ersten und des zweiten Empfangselementes den gleichen horizontalen Winkel aufweisen. Dadurch kann vereinfacht, auch bei Kurven, die Referenzgerade bestimmt werden.

Ebenfalls ist vorgesehen, dass der optoelektronische Sensor zumindest ein drittes Empfangselement aufweist, mittels welchem an einem Objekt reflektierte Lichtstrahlen empfangen werden und die Lichtstrahlen mittels der Auswerteeinheit als Abtastpunkte des dritten Empfangselementes dargestellt werden. Die Abtastpunkte des dritten Empfangselementes können beim Bestimmen des Sensorkoordinatensystems und/oder des Referenzkoordinatensystems mit berücksichtigt werden. Insbesondere kann mittels der Abtastpunkte des dritten Empfangselements eine Verifikation der Abtastpunktgeraden und der Referenzgeraden durchgeführt werden. Hierbei kann mit den Abtastpunkten des dritten Empfangselementes ein weiterer Winkel bestimmt werden, mittels welchem dann, insbesondere durch eine Mittelwertbildung der einzelnen Winkel, die zumindest eine Winkelabweichung verbessert bestimmt werden kann. Zusätzlich können auch weitere Empfangselemente vorgesehen sein. Insbesondere kann dadurch eine zuverlässige und genauere Bestimmung der Winkellage durchgeführt werden.

Gemäß einer weiteren Ausgestaltungsform wird der optoelektronische Sensor abhängig von der Winkelabweichung kalibriert. Dazu kann beispielsweise die Auswerteeinheit dazu ausgelegt sein die Winkelabweichung zu bestimmen und abhängig von der Winkelabweichung den optoelektronische Sensor zu kalibrieren. Insbesondere kann die Fehlausrichtung des optoelektronischen Sensors durch die Bestimmung der Winkellage mittels der Auswerteeinheit korrigiert werden, sodass bei einer Benutzung des optoelektronischen Sensors ein korrigiertes Sensorbild zur Auswertung für weitere Assistenzsysteme bereitgestellt werden kann. Insbesondere kann somit beim semi-autonomen, insbesondere beim autonomen, Fahrbetrieb des Kraftfahrzeugs ein verbesserter optoelektronische Sensor zur Verfügung gestellt werden, der zuverlässig und sicher im Straßenverkehr benutzt werden kann.

Ebenfalls ist vorgesehen, dass das Bestimmen der zumindest einen Ausrichtung während eines Fahrbetriebs des Kraftfahrzeugs durchgeführt wird. Insbesondere kann dadurch ermöglicht werden, dass die aktuelle Ausrichtung des optoelektronischen Sensors während der Fahrt bestimmt werden kann und bei jeder Fahrsituation der optoelektronische Sensor entsprechend kalibriert und korrigiert werden kann. Insbesondere bei beispielsweise unterschiedlichen Beladungszuständen des Kraftfahrzeugs kann die jeweilige Fehlausrichtung variieren. Durch die Bestimmung der aktuellen Ausrichtung kann auch bei unterschiedlichen Beladungszuständen der optoelektronische Sensor kalibriert werden. Dadurch lässt sich der optoelektronische Sensor in mehreren Fahrsituationen verbessert betreiben, sodass die Sicherheit im Straßenverkehr für eine Vielzahl an unterschiedlichen Fahrsituationen verbessert werden kann. Insbesondere während eines zumindest semi-autonomen Betriebs, insbesondere während eines autonomen Betriebs, des Kraftfahrzeugs kann eine verbesserte Erkennung von einer Fahrbahnführung und/oder Objekten in der Umgebung des Kraftfahrzeugs dadurch realisiert werden, wodurch es zu einer Erhöhung der Sicherheit im Straßenverkehr kommen kann.

In einer weiteren Ausführungsform ist vorgesehen, dass im Sensorbild erkannte statische Objekte mit einer zumindest abschnittsweisen Längserstreckung bezogen auf eine Fahrzeuglängsachse zur Bestimmung der zumindest einen Ausrichtung genutzt werden. Hierbei können insbesonder statische Objekte genutzt, die im Sensorbild eine linienartige bzw. linienförmige Struktur aufweisen. Durch das Unterteilen des Sensorbildes in zumindest zwei übereinanderliegende Ebenen, können die zu statischen Objekten mit einer zumindest abschnittsweisen Längserstreckung bezogen auf eine Fahrzeuglängsachse gehörenden Abtastpunkte in die zumindest zwei Ebenen aufgeteilt werden. In jeder Ebene kann folglich eine Teillinie des Objektes abgebildet werden. Liegt keine Winkelabweichung vor, so können die Teillinien einer linienartigen bzw. linienförmigen Struktur nahtlos ineinander übergehen und zwar parallel zu der Referenzachse. Liegt eine Winkelabweichung vor, d. h. der Sensor ist verkippt, so kann jede Teillinie einen Winkel zur Referenzachse aufweisen, wobei jede Teillinie den gleichen Winkel zur Referenzachse aufweisen kann. Vorteilhafterweise kann es sich bei solchen statischen Objekten um Fahrbahnmarkierungen und/oder Leitplanken und/oder Wände, insbesondere Tunnelwände handeln. Insbesondere können sich Fahrbahnmarkierungen für die Bestimmung der zumindest einen Ausrichtung eignen. Diese können zum einen in den meisten Verkehrsszenarien vorhanden sein und zum anderen können Fahrbahnmarkierungen in vielen Ländern stark reflektierende Partikel enthalten. Mittels dieser Partikel können die Fahrbahnmarkierungen eine hohe Reflektivität aufweisen und besonders gut vom optoelektronischen Sensor erfasst werden. Da insbesondere Leitplanken und/oder Wände, insbesondere Tunnelwände, ebenfalls parallel zueinander ausgerichtet sein können, können auch diese zuverlässig für das Verfahren herangezogen werden. Insbesondere kann so auch ermöglicht werden, dass Kurven bei dem Verfahren berücksichtigt werden können.

In einer weiteren Ausführungsform wird als Winkelabweichung ein Nickwinkel des optoelektronischen Sensors bestimmt. Bei dem Nickwinkel, welcher im Englischen auch als "Pitch angle" bezeichnet wird, kann es sich insbesondere um eine Drehung des optoelektronischen Sensors um eine Querachse des Kraftfahrzeugs handeln. Durch die Bestimmung der Winkelabweichung als Nickwinkel kann insbesondere die Drehung um die Querachse des optoelektronischen Sensors bestimmt werden. Anschließend kann diese Winkelabweichung des optoelektronischen Sensors kalibriert beziehungsweise korrigiert werden, sodass ein Sensorbild des optoelektronischen Sensors um diesen Nickwinkel korrigiert zur Verfügung gestellt werden kann.

In einer zusätzlichen Ausführungsform wird als Winkelabweichung ein Gierwinkel des optoelektronischen Sensors bestimmt. Bei dem Gierwinkel, welcher im Englischen auch als "Yaw angle" bezeichnet wird, kann es sich insbesondere um eine Drehung des optoelektronischen Sensors um eine Vertikalachse des Kraftfahrzeugs handeln. Durch die Bestimmung der Winkelabweichung als Gierwinkel kann insbesondere die Drehung um die Vertikalachse des optoelektronischen Sensors bestimmt werden. Anschließend kann diese Winkelabweichung des optoelektronischen Sensors kalibriert beziehungsweise korrigiert werden, sodass ein Sensorbild des optoelektronischen Sensors um diesen Gierwinkel korrigiert zur Verfügung gestellt werden kann.

Weiterhin kann vorgesehen sein, dass der Gierwinkel und der Nickwinkel als jeweilige Winkellage bestimmt werden. Hierbei kann beispielsweise der Gierwinkel auf einem ersten Prozessorkern des optoelektronischen Sensors und der Nickwinkel auf einem zweiten Prozessorkern des optoelektronischen Sensors bestimmt werden. Somit können parallel der Gierwinkel und der Nickwinkel auf unterschiedlichen Prozessorkernen bestimmt werden. Insbesondere kann dann die Auswerteeinheit, abhängig von den jeweiligen bestimmten Gierwinkel/Nickwinkel durch die Prozessorkerne eine Korrektur beziehungsweise eine Kalibrierung des optoelektronischen Sensors durchführen. Dadurch lässt sich zuverlässig und schnell und insbesondere während des Fahrbetriebs des Kraftfahrzeugs der aktuelle Gierwinkel und der aktuelle Nickwinkel gleichzeitig bestimmen. Somit kann die Kalibrierung des optischen Sensors zuverlässig und sicher durchgeführt werden kann und die Sicherheit im Straßenverkehr erhöht werden.

Ein weiterer Aspekt der Erfindung betrifft einen optoelektronischen Sensor für ein Kraftfahrzeug mit zumindest einer Sendeeinrichtung zum Aussenden von Lichtstrahlen in eine Umgebung des Kraftfahrzeugs, mit zumindest einer Empfangseinheit mit zumindest zwei Empfangselementen zum Empfangen von an einem Objekt reflektierten Lichtstrahlen und mit einer Auswerteeinheit. Die Auswerteeinheit ist dazu ausgebildet die empfangenen Lichtstrahlen als Abtastpunkte in einem Sensorbild von der Umgebung des Kraftfahrzeugs darzustellen und jeden Abtastpunkt einem Abtastelement zuzuordnen. Die Auswerteeinheit ist weiterhin dazu ausgebildet in dem erzeugten Sensorbild mit zumindest zwei empfangenen Abtastpunkten des ersten Empfangselements ein Sensorkoordinatensystem und mit zumindest einem Abtastpunkt des ersten Empfangselementes und mit zumindest einem Abtastpunkt des zweiten Empfangselementes ein Referenzkoordinatensystem zu bestimmen. Zur Bestimmung der zumindest einen Ausrichtung des optoelektronischen Sensors bestimmt die Auswerteeinheit eine Winkelabweichung durch Vergleich des Sensorkoordinatensystem mit dem Referenzkoordinatensystem.

Ein weiterer Aspekt der Erfindung betrifft ein Kraftfahrzeug mit einem solchen optoelektronischen Sensor.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Draufsicht auf ein Kraftfahrzeug mit einer Ausführungsform eines optoelektronischen Sensors;
- Fig. 2: eine schematische Ansicht der Ausführungsform des optoelektronischen Sensors;
- Fig. 3: eine schematische Ansicht eines Sensorbilds der Ausführungsform eines optoelektronischen Sensors; und
- Fig. 4: eine weitere schematische Ansicht eines Sensorbilds der Ausführungsform eines optoelektronischen Sensors.

In den Figuren werden gleiche und funktionsgleiche Elemente mit den gleichen Bezugszeichen versehen.

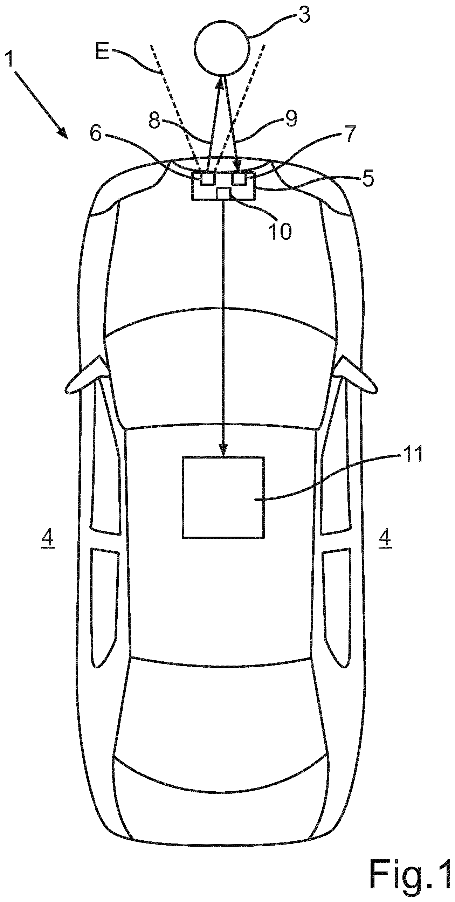

Fig. 1 zeigt ein Kraftfahrzeug 1 mit einem Fahrerassistenzsystem 2. Mit dem Fahrerassistenzsystem 2 kann beispielsweise ein Objekt 3, welches sich in einer Umgebung 4 des Kraftfahrzeugs 1 befindet, erfasst werden. Insbesondere kann mittels des Fahrerassistenzsystems 2 ein Abstand zwischen dem Kraftfahrzeug 1 und dem Objekt 3 bestimmt werden.

Das Fahrerassistenzsystem 2 umfasst zumindest einen optoelektronischen Sensor 5. Der optoelektronische Sensor 5 kann als Lidarsensor oder als Laserscanner ausgebildet sein. Der optoelektronische Sensor 5 umfasst eine Sendeeinrichtung 6, mit der Lichtstrahlen 8 ausgesendet beziehungsweise emittiert werden können. Der optoelektronische Sensor 5 ist vorliegend an einem Frontbereich des Kraftfahrzeugs 1 angeordnet. Der optoelektronische Sensor 5 kann auch an anderen Bereichen, beispielsweise an einem Heckbereich oder an einem Seitenbereich, des Kraftfahrzeugs 1 angeordnet werden.

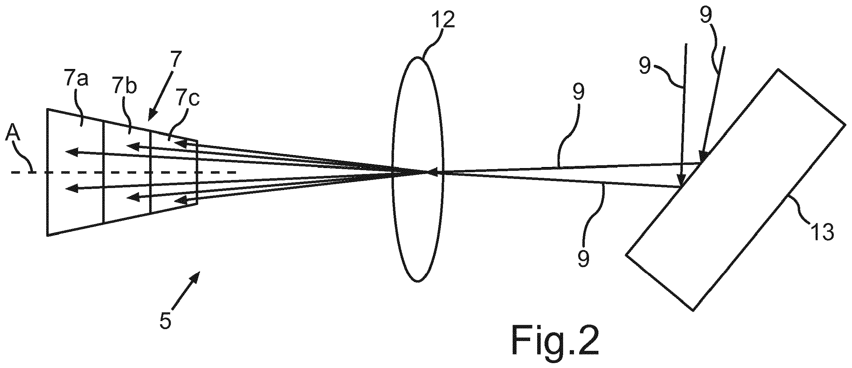

Mit der Sendeeinrichtung 6 können die Lichtstrahlen 8 innerhalb eines vorbestimmten Erfassungsbereichs E beziehungsweise eines vorbestimmten Winkelbereichs ausgesendet werden. Beispielsweise können die Lichtstrahlen 8 in einem vorbestimmten horizontalen Winkelbereich ausgesendet werden. Darüber hinaus umfasst der optoelektronische Sensor 5 eine in dieser Fig. 1 nicht dargestellte Ablenkeinrichtung 13 (siehe Fig. 2), mit der die Lichtstrahlen 8 in die Umgebung 4 abgelenkt werden können und damit der Erfassungsbereich E abgetastet wird.

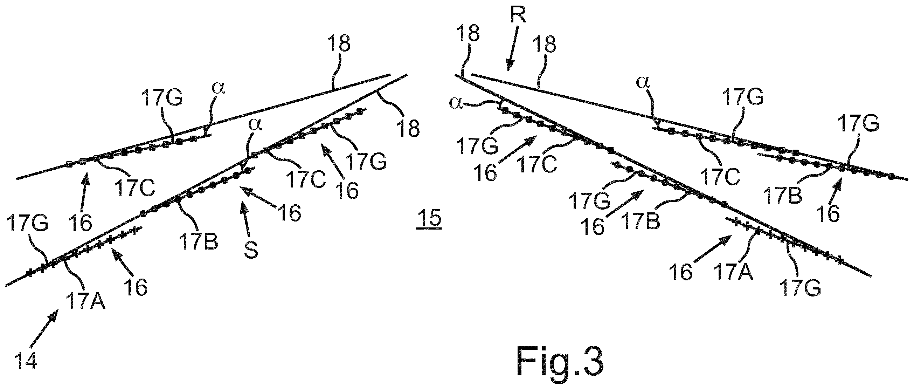

Darüber hinaus umfasst der optoelektronische Sensor 5 eine Empfangseinheit 7, die beispielsweise eine Fotodiode aufweisen kann. Mit der Empfangseinheit 7 können die von dem Objekt 3 reflektierten Lichtstrahlen 9 als Empfangssignal empfangen werden. Ferner kann der optoelektronische Sensor 5 eine Steuerungseinrichtung, die beispielsweise durch eine Mikrocontroller oder einen digitalen Signalprozessor gebildet sein kann, aufweisen. Der optoelektronische Sensor 5 kann eine Auswerteeinheit 10 aufweisen, mittels welcher die reflektierten Lichtstrahlen 9 als Abtastpunkte 17A, 17B, 17C (siehe Fig. 3) ausgewertet werden können. Das Fahrerassistenzsystem 2 umfasst ferner eine Steuerungseinrichtung 11, die beispielsweise durch ein elektronisches Steuergerät (ECUelectronic control unit) des Kraftfahrzeugs 1 gebildet sein kann. Die Steuerungseinrichtung 11 ist zur Datenübertragung mit dem optoelektronischen Sensor 5 verbunden. Die Datenübertragung kann beispielsweise über den Datenbus des Kraftfahrzeugs 1 erfolgen.

Fig. 2 zeigt eine schematische Ansicht des optoelektronischen Sensors 5. Die Empfangseinheit 7 weist eine Linse 12 auf, mittels welcher die reflektierten Lichtstrahlen 9 gebündelt werden können. Die am Objekt 3 reflektierten Lichtstrahlen 9 werden über die Ablenkeinheit 13 zu der Linse 12 reflektiert. Die Empfangseinheit 7 weist vorliegend ein erstes Empfangselement 7a, ein zweites Empfangselement 7b und ein drittes Empfangselement 7c auf. Die Lichtstrahlen 9 werden derart auf die Empfangseinheit 7 reflektiert, dass die Lichtstrahlen 9 sowohl im ersten Empfangselement 7a, im zweiten Empfangselements 7b als auch im dritten Empfangselement 7c empfangen werden können. Dadurch ist es insbesondere ermöglicht, dass innerhalb der Empfangselemente 7a, 7b, 7c das Objekt 3 jeweils erfasst werden kann. Insbesondere ist es dadurch ermöglicht, dass das Objekt 3 jeweils im ersten Empfangselement 7a, im zweiten Empfangselements 7b und im dritten Empfangselement 7c jeweils verglichen werden kann, um eine Fehlausrichtung, insbesondere eine Winkelabweichung, zu bestimmen.

Die Empfangselemente 7a, 7b, 7c sind entlang einer vertikalen Achse A des optoelektronischen Sensors 5 angeordnet. Das Sensorbild 14 (siehe Fig. 3) des optoelektronischen Sensors 5 weist drei Ebenen auf, welche durch die zumindest Empfangselemente 7a, 7b, 7c gebildet wird. Folglich befinden sich Abtastpunkte 17A des ersten Empfangselementes 7a in der ersten Ebene, Abtastpunkte 17B des zweiten Empfangselement 7b in der zweiten Ebene und die Abtastpunkte 17C des dritten Empfangselement 7c und in der dritten Ebene.

Fig. 3 zeigt eine schematische Darstellung des Sensorbilds 14 des optoelektronischen Sensors 5. In Fig. 3 ist das Sensorbild 14 einer Fahrbahn 15, auf welcher sich das Kraftfahrzeug 1 befindet, abgebildet. Das Sensorbild 14 weist Fahrbahnmarkierungen 16 auf. Die Fahrbahnmarkierungen 16 sind insbesondere aufgrund ihrer reflektierenden Beschaffenheit dazu geeignet, die Lichtstrahlen 8 sehr vorteilhaft zu reflektieren, sodass diese durch die Empfangseinheit 7 empfangen werden können. Die an den Fahrbahnmarkierungen 16 reflektierten Lichtstrahlen werden durch die unterschiedlichen Empfangselemente 7a, 7b, 7c innerhalb des Sensorbilds 14 empfangen. Die Auswerteeinheit 10 stellt die empfangenen Lichtstrahlen als Abtastpunkte 17A, 17B, 17C im Sensorbild 14 dar und ordnet die Abtastpunkte 17A, 17B, 17C jeweils dem entsprechenden Empfangselemente 7a, 7b, 7c zu. Die zum ersten Empfangselement 7a zugeordneten Abtastpunkte 17A sind im vorliegenden Beispiel durch Pluszeichen dargestellt, die zum zweiten Empfangselement 7b zugeordneten Abtastpunkte 17B sind vorliegend durch Kreise dargestellt und die zum dritten Empfangselement 7c zugeordneten Abtastpunkte 17C sind vorliegend durch Vierecke dargestellt.

Es ist vorgesehen, dass mittels zumindest zwei der Abtastpunkte 17A des ersten Empfangselement 7a der Empfangseinheit 7 ein Sensorkoordinatensystem S bestimmt wird. Das Sensorkoordinatensystem S kann alternativ oder ergänzend auch durch zumindest zwei Abtastpunkte 17B des zweiten Empfangselements 7b und/oder durch zumindest zwei Abtastpunkte 17C des dritten Empfangselements 7c bestimmt werden. Es kann insbesondere vorgesehen sein, dass durch die jeweiligen Abtastpunkte 17A, 17B, 17C eine Abtastpunktgerade 17G des Sensorbilds 14 des optoelektronischen Sensors 5 gelegt wird und mittels der Abtastpunktgeraden 17G das Sensorkoordinatensystem S bestimmt wird. Wie aus Fig. 3 zu sehen ist, sind die Abtastpunktgeraden 17G, die für die unterschiedlichen Empfangselemente 7a, 7b, 7c bestimmt wurden, parallel ausgerichtet und weisen folglich den gleichen horizontalen Winkel.

Ein Referenzkoordinatensystems R wird mit einem der Abtastpunkte 17A des ersten Empfangselementes 7a mit einem der Abtastpunkte 17B des zweiten Empfangselementes 7b oder alternativ oder ergänzend mit einem Abtastpunkte 17C bestimmt. Abhängig von einer Auswahl eines Abtastpunkts 17A des ersten Empfangselementes 7a ist der Abtastpunkt 17B des zweiten Empfangselementes 7b und/oder der Abtastpunkt 17C des dritten Empfangselementes 7c vorgegeben. Hierbei ist insbesondere vorgesehen, dass die Abtastpunkte 17A, 17B, 17C den gleichen Raumwinkel aufweisen bzw. wenn der zeitlich gesehen erste dem Sensorbild zugeordnete Abtastpunkt 17A des ersten Empfangselementes 7a ausgewählt wurde, so ist vorgesehen, dass auch der zeitlich gesehen erste dem Sensorbild zugeordnete Abtastpunkt 17B, 17C des zweiten und/oder des dritten Empfangselementes 7b, 7c ausgewählt wird. Das Sensorkoordinatensystem S wird mit dem Referenzkoordinatensystem R verglichen und abhängig von dem Vergleich wird die zumindest eine Winkelabweichung des optoelektronischen Sensors 5 bestimmt.

Ferner ist vorgesehen, dass durch zumindest einem der Abtastpunkte 17A des ersten Empfangseinheit 7a und einem korrespondierenden der Abtastpunkt 17B des zweiten Empfangseinheit 7b eine Referenzgerade 18 gelegt wird und das Referenzkoordinatensystem R mittels der Referenzgeraden 18 bestimmt wird. Insbesondere ist vorgesehen, dass die Winkelabweichung als Winkel zwischen der Abtastpunktgeraden 17G und der Referenzgeraden 18 des Referenzkoordinatensystems R bestimmt wird. Insbesondere kann vorgesehen sein, dass die Winkelabweichung als Mittelwert gebildet wird über eine Vielzahl an Winkelabweichungen, die wie oben beschrieben mit unterschiedlichen Abtastpunkten 17A, 17B, 17C der unterschiedlichen Empfangselemente 7a, 7b, 7c bestimmt wurden. Im vorliegenden Beispiel ist insbesondere aufgezeigt, wie ein Gierwinkel α als Winkelabweichung bestimmt werden kann, wobei der Gierwinkel α insbesondere eine Drehung des optoelektronischen Sensors 5 um die Vertikalachse Z ist.

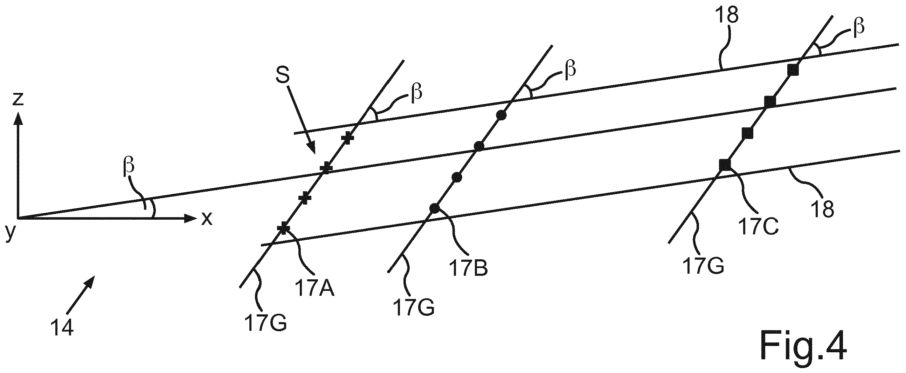

Fig. 4 zeigt eine weitere schematische Perspektivansicht des Sensorbilds 14. Im vorliegenden Beispiel kann insbesondere ein Nickwinkel β des optoelektronischen Sensors 5 bestimmt werden. Bei dem Nickwinkel β handelt sich insbesondere um eine Drehung des optoelektronischen Sensors 5 um eine Querachse Y. Ferner kann das Kraftahrzeug 1 eine Längsachse X und eine Vertikalachse Z aufweisen. Wie in Fig. 4 zu sehen, kann das Sensorkoordinatensystem S mittels der Abtastpunktgeraden 17G der Abtastpunkte 17A, 17B, 17C bestimmt werden. Die Referenzgeraden 18 können insbesondere durch jeweilig korrespondierenden Abtastpunkte 17A, 17B, 17C erzeugt werden. Insbesondere die Winkelabweichung zwischen den Abtastpunktgeraden 17G und den Referenzgeraden 18 kann dann vorliegend als Nickwinkel β bestimmt werden. Sollten beispielsweise mehrere Nickwinkel β und/oder Gierwinkel α bestimmt werden, so kann die Winkelabweichung insbesondere durch einen Mittelwert der einzelnen Nickwinkel β und/oder Gierwinkel α bestimmt werden.

Es ist insbesondere vorgesehen, dass abhängig von der bestimmten Winkelabweichung der optoelektronische Sensor 5 kalibriert beziehungsweise korrigiert wird. Insbesondere kann dazu die Auswerteeinheit 10 des optoelektronischen Sensors 5 die Winkelabweichung bestimmen und entsprechend korrigiert an die Steuerungseinrichtung 10 senden. Insbesondere kann dadurch eine verbesserte Auswertung der Information des optoelektronischen Sensors 5 für die Steuerungseinrichtung 11 zu Verfügung gestellt werden, sodass die Sicherheit im Straßenverkehr erhöht werden kann.

Es ist insbesondere vorgesehen, dass die Bestimmung der Winkellage α, β während eines Fahrbetriebs des Kraftfahrzeugs 1 durchgeführt wird.

Die Abtastpunkte 17A, 17B, 17C können insbesondere von den Fahrbahnmarkierungen 16 der Fahrbahn 15, auf welche sich das Kraftahrzeug 1 befindet, stammen. Jedoch sind auch Abtastpunkte 17A, 17B, 17C von einer Leitplanke und/oder von einer Wand, insbesondere von einer Tunnelwand, der Fahrbahn 16, auf welcher sich das Kraftfahrzeug 1 befindet, möglich.

Ferner ist es möglich, dass der Gierwinkel α und der Nickwinkel β als jeweilige Winkelabweichung bestimmt werden, wobei der Gierwinkel α auf einem ersten Prozessorkern des optoelektronischen Sensors 5 und der Nickwinkel β auf einem zweiten Prozessorkern des optoelektronischen Sensors 5 bestimmt werden können.

## Patentansprüche

1. Verfahren zur Bestimmung zumindest einer Ausrichtung eines optoelektronischen Sensors (5) eines Kraftfahrzeugs (1) relativ zum Kraftfahrzeug (1), wobei der optoelektronische Sensor eine Sendeeinrichtung (6), eine Empfangseinheit (7) mit zumindest zwei Empfangselementen (7a, 7b) und eine Auswerteeinheit umfasst, mit folgenden Schritten:
- Aussenden von Lichtstrahlen (8) in eine Umgebung (4) des Kraftfahrzeugs (1) durch die Sendeeinrichtung (7)
- und Empfangen von an einem Objekt (3) reflektierten Lichtstrahlen (8) durch die Empfangseinheit (7), wobei die empfangenen Lichtstrahlen (8) durch die Auswerteeinheit als Abtastpunkte (17A, 17B, 17C) in einem vom optoelektronischen Sensor (5) erzeugten Sensorbild (14) von der Umgebung des Kraftfahrzeugs (1) dargestellt werden und jeder Abtastpunkt (17A, 17B, 17C) einem Empfangselement (7a, 7b) zugeordnet wird,
**dadurch gekennzeichnet,**
**dass** in dem erzeugten Sensorbild (14) mit zumindest zwei empfangenen Abtastpunkten (17A) des ersten Empfangselements (7a) ein Sensorkoordinatensystem (S) und mit zumindest einem Abtastpunkt (17A) des ersten Empfangselementes und mit zumindest einem Abtastpunkt (17B) des zweiten Empfangselementes (7b) ein Referenzkoordinatensystem (R) bestimmt wird,
wobei zur Bestimmung der zumindest einen Ausrichtung des optoelektronischen Sensors (5) eine Winkelabweichung durch Vergleich des Sensorkoordinatensystem (S) mit dem Referenzkoordinatensystem (R) bestimmt wird,
**dass** die zumindest zwei Empfangselemente (7a, 7b, 7c) entlang einer vertikalen Achse (A) des optoelektronischen Sensors (5) angeordnet werden und das Sensorbild (14) des optoelektronischen Sensors (5) zumindest zwei Ebenen aufweist, wobei die erste Ebene durch die Abtastpunkte (17A) des ersten Empfangselementes (7a) und die zweite Ebene durch die Abtastpunkte (17B) des zweiten Empfangselementes (7b) gebildet wird,
**dass** durch zumindest zwei Abtastpunkte (17A) des ersten Empfangselementes (7a) eine Abtastpunktgerade (17G) des Sensorbilds (14) des optoelektronischen Sensors (5) gebildet wird und mittels der Abtastpunktgeraden (17G) das Sensorkoordinatensystem (S) bestimmt wird,
**dass** die Winkelabweichung als Winkel zwischen der Abtastpunktgeraden (17G) und einer Referenzgeraden (18) des Referenzkoordinatensystems (R) bestimmt wird und dass durch einen Abtastpunkt (17A) des ersten Empfangselements (7a) und einen Abtastpunkt (17B) des zweiten Empfangselements (7b) eine Referenzgerade (18) gebildet wird, wobei der Abtastpunkt (17B) des zweiten Empfangselementes (7b) und der Abtastpunkt (17A) des ersten Empfangselementes (7a) einen gleichen horizontalen Winkel aufweisen, der einem Aussendewinkel beim Aussenden eines Lichtstrahls in die Umgebung des Kraftfahrzeugs entspricht, und das Referenzkoordinatensystem (R) mittels der Referenzgeraden (18) bestimmt wird.

2. Verfahren nach einem der vorhergehenden Ansprüche,
**dadurch gekennzeichnet, dass**
der optoelektronische Sensor (5) zumindest ein drittes Empfangselement (7c) aufweist, mittels welchem an einem Objekt reflektierte Lichtstrahlen (8) empfangen werden und die Lichtstrahlen mittels der Auswerteeinheit im Sensorbild (14) als Abtastpunkte (17C) des dritten Empfangselementes dargestellt werden, und zumindest ein Abtastpunkt (17C) des dritten Empfangselementes bei dem Bestimmen des Sensorkoordinatensystems (S) und/oder des Referenzkoordinatensystems (R) mit berücksichtigt wird.

3. Verfahren nach einem der vorhergehenden Ansprüche,
**dadurch gekennzeichnet, dass**
abhängig von der Winkelabweichung der optoelektronische Sensor (5) kalibriert wird.

4. Verfahren nach einem der vorhergehenden Ansprüche,
**dadurch gekennzeichnet, dass**
das Bestimmen der zumindest einen Ausrichtung während eines Fahrbetriebs des Kraftfahrzeugs (1) durchgeführt wird.

5. Verfahren nach einem der vorhergehenden Ansprüche,
**dadurch gekennzeichnet, dass**
im Sensorbild erkannte statische Objekte (16) mit einer zumindest abschnittsweisen Längserstreckung bezogen auf eine Fahrzeuglängsachse zur Bestimmung der zumindest einen Ausrichtung genutzt werden

6. Verfahren nach Anspruch 5,
**dadurch gekennzeichnet, dass**
die statischen Objekte (16) Fahrbahnmarkierungen (16) und/oder Leitplanken und/oder Wände, insbesondere Wände eines Tunnels, sind.

7. Verfahren nach einem der vorhergehenden Ansprüche,
**dadurch gekennzeichnet, dass**
als Winkelabweichung ein Nickwinkel (β) des optoelektronischen Sensors (5) bestimmt wird.

8. Verfahren nach einem der vorhergehenden Ansprüche,
**dadurch gekennzeichnet, dass**
als Winkelabweichung ein Gierwinkel (α) des optoelektronischen Sensors (5) bestimmt wird.

9. Optoelektronischer Sensor (5) für ein Kraftfahrzeug (1) mit zumindest einer Sendeeinrichtung (6) zum Aussenden von Lichtstrahlen (8) in eine Umgebung (4) des Kraftfahrzeugs (1), mit zumindest einer Empfangseinheit (7) mit zumindest zwei Empfangselementen (7a, 7b) zum Empfangen von an einem Objekt (3) reflektierten Lichtstrahlen (8) und mit einer Auswerteeinheit (10), die dazu ausgebildet ist die empfangenen Lichtstrahlen (8) als Abtastpunkte (17A, 17B, 17C) in einem Sensorbild (14) von der Umgebung des Kraftfahrzeugs (1) darzustellen und jeden Abtastpunkt (17A, 17B, 17C) einem Abtastelement (7a, 7b, 7c) zuzuordnen, **dadurch gekennzeichnet, dass**
die Auswerteeinheit (10) weiterhin dazu ausgebildet ist in dem erzeugten Sensorbild (14) mit zumindest zwei empfangenen Abtastpunkten (17A) des ersten Empfangselements (7a) ein Sensorkoordinatensystem (S) und mit zumindest einem Abtastpunkt (17A) des ersten Empfangselementes und mit zumindest einem Abtastpunkt (17B) des zweiten Empfangselementes (7b) ein Referenzkoordinatensystem (R) zu bestimmen,
und dass die Auswerteeinheit (10) zur Bestimmung der zumindest einen Ausrichtung des optoelektronischen Sensors (5) eine Winkelabweichung (α, β) durch Vergleich des Sensorkoordinatensystem (S) mit dem Referenzkoordinatensystem (R) bestimmt
dass die zumindest zwei Empfangselemente (7a, 7b, 7c) entlang einer vertikalen Achse (A) des optoelektronischen Sensors (5) angeordnet sind und das Sensorbild (14) des optoelektronischen Sensors (5) zumindest zwei Ebenen aufweist, wobei die erste Ebene durch die Abtastpunkte (17A) des ersten Empfangselementes (7a) und die zweite Ebene durch die Abtastpunkte (17B) des zweiten Empfangselementes (7b) gebildet wird,
dass die Auswerteeinheit (10) dazu ausgebildet ist durch zumindest zwei Abtastpunkte (17A) des ersten Empfangselementes (7a) eine Abtastpunktgerade (17G) des Sensorbilds (14) des optoelektronischen Sensors (5) zu bilden und mittels der Abtastpunktgeraden (17G) das Sensorkoordinatensystem (S) zu bestimmen,
dass die Auswerteeinheit (10) dazu ausgebildet ist die Winkelabweichung als Winkel zwischen der Abtastpunktgeraden (17G) und einer Referenzgeraden (18) des Referenzkoordinatensystems (R) zu bestimmen
und dass die Auswerteeinheit (10) dazu ausgebildet ist durch einen Abtastpunkt (17A) des ersten Empfangselements (7a) und einen Abtastpunkt (17B) des zweiten Empfangselements (7b) eine Referenzgerade (18) zu bilden, wobei der Abtastpunkt (17B) des zweiten Empfangselementes (7b) und der Abtastpunkt (17A) des ersten Empfangselementes (7a) einen gleichen horizontalen Winkel aufweisen, der einem Aussendewinkel beim Aussenden eines Lichtstrahls in die Umgebung des Kraftfahrzeugs entspricht, und das Referenzkoordinatensystem (R) mittels der Referenzgeraden (18) zu bestimmen.

10. Kraftfahrzeug (1) mit einem optoelektronischen Sensor (5) nach Anspruch 9.

## Claims

1. Method for determining at least one alignment of an optoelectronic sensor (5) of a motor vehicle (1) relative to the motor vehicle (1), wherein the optoelectronic sensor comprises a transmitter device (6), a receiver unit (7) with at least two receiver elements (7a, 7b), and an evaluation unit, said method including the following steps:
- emitting light beams (8) into surroundings (4) of the motor vehicle (1) by the transmitter device (7),
- and receiving light beams (8) reflected at an object (3) by means of the receiver unit (7), wherein the received light beams (8) are represented by the evaluation unit as scan points (17A, 17B, 17C) in a sensor image (14) of the surroundings of the motor vehicle (1) generated by the optoelectronic sensor (5) and each scan point (17A, 17B, 17C) is assigned to a receiver element (7a, 7b),
**characterized**
**in that** a sensor coordinate system (S) is determined in the generated sensor image (14) using at least two received scan points (17A) of the first receiver element (7a) and a reference coordinate system (R) is determined in said generated sensor image using at least one scan point (17A) of the first receiver element and using at least one scan point (17B) of the second receiver element (7b),
wherein an angular deviation is determined by way of a comparison of the sensor coordinate system (S) and the reference coordinate system (R) for the purposes of determining the at least one alignment of the optoelectronic sensor (5),
**in that** the at least two receiver elements (7a, 7b, 7c) are arranged along a vertical axis (A) of the optoelectronic sensor (5) and the sensor image (14) of the optoelectronic sensor (5) has at least two planes, wherein the first plane is formed by the scan points (17A) of the first receiver element (7a) and the second plane is formed by the scan points (17B) of the second receiver element (7b),
**in that** a scan point straight line (17G) of the sensor image (14) of the optoelectronic sensor (5) is formed by at least two scan points (17A) of the first receiver element (7a) and the sensor coordinate system (S) is determined by means of the scan point straight line (17G),
**in that** the angular deviation is determined as an angle between the scan point straight line (17G) and a reference straight line (18) of the reference coordinate system (R), and in that a reference straight line (18) is formed by a scan point (17A) of the first receiver element (7a) and a scan point (17B) of the second receiver element (7b), wherein the scan point (17B) of the second receiver element (7b) and the scan point (17A) of the first receiver element (7a) have the same horizontal angle that corresponds to an emission angle when a light beam is emitted into the surroundings of the motor vehicle, and the reference coordinate system (R) is determined by means of the reference straight line (18).

2. Method according to one of the preceding claims, **characterized in that**
the optoelectronic sensor (5) comprises at least one third receiver element (7), by means of which light beams (8) reflected at an object are received and the light beams are represented by the evaluation unit as scan points (17C) of the third receiver element in the sensor image (14), and at least one scan point (17C) of the third receiver element is taken into account when determining the sensor coordinate system (S) and/or the reference coordinate system (R).

3. Method according to either of the preceding claims, **characterized in that**
the optoelectronic sensor (5) is calibrated on the basis of the angular deviation.

4. Method according to one of the preceding claims, **characterized in that**
the at least one alignment is determined during a driving operation of the motor vehicle (1).

5. Method according to one of the preceding claims, **characterized in that**
static objects (16) with a longitudinal extent, at least in sections, in relation to the vehicle longitudinal axis, which are recognized in the sensor image, are used to determine the at least one alignment.

6. Method according to Claim 5,
**characterized in that**
the static objects (16) are road markings (16) and/or road safety barriers and/or walls, in particular walls of a tunnel.

7. Method according to one of the preceding claims,
**characterized in that**
a pitch angle (β) of the optoelectronic sensor (5) is determined as angular deviation.

8. Method according to one of the preceding claims,
**characterized in that**
a yaw angle (α) of the optoelectronic sensor (5) is determined as angular deviation.

9. Optoelectronic sensor (5) for a motor vehicle (1) comprising at least one transmitter device (6) for emitting light beams (8) into surroundings (4) of the motor vehicle (1), comprising at least one receiver unit (7) with at least two receiver elements (7a, 7b) for receiving light beams (8) reflected at an object (3) and comprising an evaluation unit (10), which is embodied to represent the received light beams (8) as scan points (17A, 17B, 17C) in a sensor image (14) of the surroundings of the motor vehicle (1) and to assign each scan point (17A, 17B, 17C) to a scan element (7a, 7b, 7c), **characterized in that**
the evaluation unit (10) is further embodied to determine a sensor coordinate system (S) in the generated sensor image (14) using at least two received scan points (17A) of the first receiver element (7a) and determine a reference coordinate system (R) in said generated sensor image using at least one scan point (17A) of the first receiver element and using at least one scan point (17B) of the second receiver element (7b),
and **in that** the evaluation unit (10) determines an angular deviation (α, β) by way of a comparison of the sensor coordinate system (S) and the reference coordinate system (R) for the purposes of determining the at least one alignment of the optoelectronic sensor (5),
**in that** the at least two receiver elements (7a, 7b, 7c) are arranged along a vertical axis (A) of the optoelectronic sensor (5) and the sensor image (14) of the optoelectronic sensor (5) has at least two planes, wherein the first plane is formed by the scan points (17A) of the first receiver element (7a) and the second plane is formed by the scan points (17B) of the second receiver element (7b),
**in that** the evaluation unit (10) is embodied to form a scan point straight line (17G) of the sensor image (14) of the optoelectronic sensor (5) by way of at least two scan points (17A) of the first receiver element (7a) and to determine the sensor coordinate system (S) by means of the scan point straight line (17G),
**in that** the evaluation unit (10) is embodied to determine the angular deviation as an angle between the scan point straight line (17G) and a reference straight line (18) of the reference coordinate system (R),
and **in that** the evaluation unit (10) is embodied to form a reference straight line (18) by way of a scan point (17A) of the first receiver element (7a) and a scan point (17B) of the second receiver element (7b), wherein the scan point (17B) of the second receiver element (7b) and the scan point (17A) of the first receiver element (7a) have the same horizontal angle that corresponds to an emission angle when a light beam is emitted into the surroundings of the motor vehicle, and to determine the reference coordinate system (R) by means of the reference straight line (18).

10. Motor vehicle (1) comprising an optoelectronic sensor (5) according to Claim 9.

## Revendications

1. Procédé pour déterminer au moins une position angulaire d'un capteur optoélectronique (5) d'un véhicule automobile (1) par rapport au véhicule automobile (1), le capteur optoélectronique comprenant un dispositif d'émission (6), une unité de réception (7) avec au moins deux éléments de réception (7a, 7b) et une unité d'évaluation, comprenant les étapes suivantes :
- émettre des rayons lumineux (8) dans un environnement (4) du véhicule automobile (1) par le dispositif d'émission (7),
- et recevoir des rayons lumineux (8) réfléchis sur un objet (3) par l'unité de réception (7), les rayons lumineux (8) reçus étant représentés par l'unité d'évaluation sous forme de points de balayage (17A, 17B, 17C) dans une image de capteur (14) de l'environnement du véhicule automobile (1) produite par le capteur optoélectronique (5), et chaque point de balayage (17A, 17B, 17C) étant associé à un élément de réception (7a, 7b),
**caractérisé en ce que**, dans l'image de capteur (14) générée, un système de coordonnées de capteur (S) est déterminé avec au moins deux points de balayage (17A) reçus du premier élément de réception (7a), et un système de coordonnées de référence (R) est déterminé avec au moins un point de balayage (17A) du premier élément de réception et avec au moins un point de balayage (17B) du deuxième élément de réception (7b),
un écart angulaire étant déterminé pour déterminer l'au moins une orientation du capteur optoélectronique (5) par comparaison du système de coordonnées du capteur (S) avec le système de coordonnées de référence (R),
**en ce que** les au moins deux éléments de réception (7a, 7b, 7c) sont disposés le long d'un axe vertical (A) du capteur optoélectronique (5) et l'image de capteur (14) du capteur optoélectronique (5) présente au moins deux plans, le premier plan étant formé par les points de balayage (17A) du premier élément de réception (7a) et le deuxième plan par les points de balayage (17B) du deuxième élément de réception (7b),
**en ce qu'**une ligne de points de balayage (17G) de l'image de capteur (14) du capteur optoélectronique (5) est formée par au moins deux points de balayage (17A) du premier élément de réception (7a), et le système de coordonnées de capteur (S) est déterminé au moyen de la ligne de points de balayage (17G),
**en ce que** l'écart angulaire est déterminé comme étant un angle entre la ligne de points de balayage (17G) et une ligne de référence (18) du système de coordonnées de référence (R) et **en ce qu'**une ligne de référence (18) est formée par un point de balayage (17A) du premier élément de réception (7a) et un point de balayage (17B) du deuxième élément de réception (7b), le point de balayage (17B) du deuxième élément de réception (7b) et le point de balayage (17A) du premier élément de réception (7a) présentant un même angle horizontal, qui correspond à un angle d'émission lors de l'émission d'un rayon lumineux dans l'environnement du véhicule automobile, et le système de coordonnées de référence (R) étant déterminé au moyen de la ligne de référence (18).

2. Procédé selon l'une des revendications précédentes, **caractérisé en ce que**
e capteur optoélectronique (5) présente au moins un troisième élément de réception (7c) au moyen duquel des rayons lumineux (8) réfléchis sur un objet sont reçus et les rayons lumineux sont affichés au moyen de l'unité d'évaluation dans l'image du capteur (14) en tant que points de balayage (17C) du troisième élément de réception, et au moins un point de balayage (17C) du troisième élément de réception est pris en compte lors de la détermination du système de coordonnées du capteur (S) et/ou du système de coordonnées de référence (R).

3. Procédé selon l'une des revendications précédentes, **caractérisé en ce que**
le capteur optoélectronique (5) est calibré en fonction de l'écart angulaire.

4. Procédé selon l'une des revendications précédentes, **caractérisé en ce que**
la détermination de ladite au moins une orientation est effectuée pendant une circulation du véhicule automobile (1) .

5. Procédé selon l'une des revendications précédentes, **caractérisé en ce que**
des objets statiques (16) reconnus dans l'image du capteur ayant une extension longitudinale au moins partielle par rapport à un axe longitudinal du véhicule sont utilisés pour déterminer l'au moins une orientation.

6. Procédé selon la revendication 5,
**caractérisé en ce que**
les objets statiques (16) sont des marquages de la chaussée (16) et/ou des glissières de sécurité et/ou des parois, en particulier des parois d'un tunnel.

7. Procédé selon l'une des revendications précédentes, **caractérisé en ce que**
un angle d'inclinaison (β) du capteur optoélectronique (5) est déterminé en tant qu'écart angulaire.

8. Procédé selon l'une des revendications précédentes, **caractérisé en ce que**
un angle de lacet (α) du capteur optoélectronique (5) est déterminé en tant qu'écart angulaire.

9. Capteur optoélectronique (5) pour un véhicule automobile (1) comprenant au moins un dispositif d'émission (6) pour émettre des rayons lumineux (8) dans un environnement (4) du véhicule automobile (1), comprenant au moins une unité de réception (7) ayant au moins deux éléments de réception (7a, 7b) pour recevoir des rayons lumineux (8) réfléchis sur un objet (3) et comprenant une unité d'évaluation (10), qui est conçue pour représenter les rayons lumineux reçus (8) sous forme de points de balayage (17A, 17B, 17C) dans une image de capteur (14) de l'environnement du véhicule automobile (1) et pour associer chaque point de balayage (17A, 17B, 17C) à un élément de balayage (7a, 7b, 7c), **caractérisé en ce que**
l'unité d'évaluation (10) est en outre conçue pour déterminer dans l'image de capteur (14) générée un système de coordonnées de capteur (S) avec au moins deux points de balayage (17A) reçus du premier élément de réception (7a) et un système de coordonnées de référence (R) avec au moins un point de balayage (17A) du premier élément de réception et avec au moins un point de balayage (17B) du deuxième élément de réception (7b),
et **en ce que** l'unité d'évaluation (10) détermine, pour la détermination de l'au moins une orientation du capteur optoélectronique (5), un écart angulaire (α, β) par comparaison du système de coordonnées du capteur (S) avec le système de coordonnées du capteur (R),
**en ce que** les au moins deux éléments de réception (7a, 7b, 7c) sont disposés le long d'un axe vertical (A) du capteur optoélectronique (5) et l'image de capteur (14) du capteur optoélectronique (5) présente au moins deux plans, le premier plan étant formé par les points de balayage (17A) du premier élément de réception (7a) et le deuxième plan étant formé par les points de balayage (17B) du deuxième élément de réception (7b),
**en ce que** l'unité d'évaluation (10) est conçue pour former une ligne de points de balayage (17G) de l'image de capteur (14) du capteur optoélectronique (5) par au moins deux points de balayage (17A) du premier élément de réception (7a) et pour déterminer le système de coordonnées de capteur (S) au moyen de la ligne de points de balayage (17G),
**en ce que** l'unité d'évaluation (10) est conçue pour déterminer l'écart angulaire comme étant l'angle entre la ligne de points de balayage (17G) et une ligne de référence (18) du système de coordonnées de référence (R),
et **en ce que** l'unité d'évaluation (10) est conçue pour former une ligne de référence (18) passant par un point de balayage (17A) du premier élément de réception (7a) et un point de balayage (17B) du deuxième élément de réception (7b), le point de balayage (17B) du deuxième élément de réception (7b) et le point de balayage (17A) du premier élément de réception (7a) présentant un même angle horizontal qui correspond à un angle d'émission extérieur lors de l'émission d'un rayon lumineux dans l'environnement du véhicule automobile, et pour déterminer le système de coordonnées de référence (R) au moyen de la ligne de référence (18).

10. Véhicule automobile (1) comprenant un système selon la revendication 9.
